# EUROPEAN PATENT APPLICATION

(11) **EP 3 168 331 A1**
(43) Date of publication of application: **17.05.2017**
(21) Application number: 15818949.8
(22) Date of filing: 02.07.2015
(51) Int. Cl.: C25D 11/08, B82Y 40/00, B82Y 30/00

(54) **NANOSTRUCTURED MATERIAL, PRODUCTION PROCESS AND USE THEREOF**

(30) Priority: 11.07.2014 ES 201431048
(71) Applicant: Consejo Superior de Investigaciones Cientificas (CSIC), 28006 Madrid (ES)
(72) Inventor: MARTÍN GONZÁLEZ, Maria Soledad, 28760 Tres Cantos (Madrid) (ES); MARTÍN PÉREZ, Jaime, 28760 Tres Cantos (Madrid) (ES)
(74) Representative: Pons Ariño, Angel
(86) International application number: PCT/ES2015/070519
(87) International publication number: WO 2016/005636

(57) **Abstract**

The present document provides details of a nanostructured material defined by an anodized alumina having a nanostructure with transverse pores that pass through and connect longitudinal pores grown on an aluminium substrate. This document also describes the process for producing said nanostructured material and the possible use thereof as a template or mould for obtaining nanostructures formed by nanowires, which are generated in the cavities or pores of the aforementioned nanostructure of the nanomaterial of the invention. Likewise, this document details the use of the nanostructured anodized alumina material as a mould for producing nanostructures.

## Description

### OBJECT OF THE INVENTION

The object of the invention is a nanostructured anodized aluminium material, in addition to its corresponding manufacturing process and eventual uses of the nanostructured anodized aluminium material, which is particularly suitable as a mould for the production of nanostructures.

The material object of the invention is constituted by a homogeneous hexagonal lattice of parallel cylindrical nanotubes arranged perpendicularly to the anodized surface and which are interconnected by pores located in planes parallel to the anodized surface.

### BACKGROUND OF THE INVENTION

Anodizing is an electrolytic passivation process used to increase the thickness of the natural oxide layer on the surface of metal parts. This technique is often used on aluminium to generate an artificial protective oxide layer, known as anodic aluminium oxide (AAO). The layer is achieved using electrochemical processes and provides an electrically insulating surface with greater chemical and mechanical resistance that increases the durability of the aluminum. The process owes its name to the fact that the part to be treated with this material acts as an anode in the electrical circuit during the electrolytic process.

Anodizing is used to protect metals such as aluminium and titanium from abrasion and corrosion, providing, besides protection, aesthetic advantages by dyeing the surface. Anodizing techniques have evolved considerably over time, ranging from a layer of aluminium oxide in its natural white colour to dyeing subsequent to the formation of the layer with colours such as gold, bronze, black and red.

In aluminium anodizing processes, pores parallel therebetween and perpendicular to the surface of the initial substrate are generated. These pores are called longitudinal pores and are characterised in that they constitute a hexagonal lattice. In the state of the art, processes for modulating the shape of the diameter of the longitudinal pores of anodic alumina films are amply described. The longitudinal pores have diameters of less than 0.5 pm, pores of submicron diameter, even reaching nanometric diameters below 100 nm. Pore diameter is controlled by the type of electrolyte used in the anodizing process. Pore diameter is controlled through the type of electrolyte used in the anodizing process. Microscopic pore modification is achieved by reproducing the temperature conditions, electrolyte concentrations, voltages, agitation control, affected load surface and alloy characteristics.

There are different methods for dyeing the oxide layers formed during the anodizing process, consisting of the dyeing of inorganic or organic substances. The latest techniques based on optical interference processes can provide finishes such as blue, pearl grey and green. Finishes by optical interference are based on subsequent changes made to the pore of the aluminium oxide formed during the anodizing stage.

Currently, the preparation of AAO nanostructured in the form of nanotubes and the characterisation of various acidic media for anodizing (H₂SO₄, H₃PO₄, H₂C₂O₄), in addition to the anodizing conditions (voltage, current density, temperature, etc.) is known. In fact, documents such as:
- W. Lee; K. Schwirn; M. Steinhart; E. Pippel; R. Scholz; U. Gösele, (Nat Nano 2008, 3 (4), 234-239.25*)*
- W. Lee; R. Scholz; U. Gol'sele (Nano Letters 2008, 8 (8), 2155-2160*. 26.* GD Sulka; A. Brzózka; L. Liu, Electrochimica Acta 2011, 56 (14) 4972- 4979*)*
describe the differences and possible advantages of using mild anodizing (MA) conditions and hard anodizing (HA) alternately to configure the inner diameter of the nanotubes.

In general, the growth processes of the anodized alumina film at lower anodizing potentials, mild anodizing (MA), are slow and require several days of processing for a thickness of a few tens of micrometres. In the use of higher anodizing potentials, hard anodizing (HA) makes it possible to increase rate of growth, thereby achieving greater thicknesses. In hard anodizing, higher electric current densities than in mild anodizing are generally used, making it possible to modify the diameter of the longitudinal nanostructures, producing pores with larger diameters. It has also been described that the manufacture of porous films by alternate pulsing, a process called pulse anodizing, periodically alternating "mild anodizing" (MA) stages with pulses in the "hard anodizing" (HA) regime, produces pores that widen in the hard anodizing zones with respect to the diameter of the mild anodizing zone. In this regard, the document published as WO2008014977 is known, which details, inter alia, the application of alternate MA and HA stages in which different acidic media are used for anodizing, enabling the modulation of the diameter of the nanotubes, since the diameter obtained by HA is less than that produced by MA.

The document published as EP1884578A1 discloses an anodizing process based on oxalic acid for ordered alumina membranes, which can be easily implemented in nanotechnology and in industry. The process is an improvement of so-called "hard anodizing" which has been widely used since the 1960s in the industry for high-speed manufacturing of elements having good mechanical characteristics, high thickness (>100 pm) and low anodic alumina film porosity.

Moreover, W. Lee et al. (Nanotechnology 21, 485304 (8pp), November 2010*)* makes reference to the advantages of using pulses when internally confirming the diameter of the nanotubes, although the process followed does not use the same reactive medium or the other reaction conditions specified in the basic document. Evidently, despite knowing the different resulting diameters of the nanotube obtained by the different hard and mild anodizing regimes, this paper does not pursue the formation of channels parallel to the anodized surface that interconnect the nanotubes.

The anodized alumina films can serve as well-defined two-dimenionsional (2D) nanoarchitectures that can be applied in different nanotechnologies, such as photonic crystals, metamaterials, micromembranes, filters or moulds for synthesis in the manufacture of nanostructures such as nanowire and nanotube materials of very diverse nature.

In other developments, anodic alumina have been used as patterns or nano-moulds for manufacturing nanostructures, particularly nanowires and nanotubes, as shown, for example, by Masuda, H. and K. Fukuda (Science, 1995. 268 (5216): p. 1466-1468). The pores of the anodized alumina film are filled by means of various methods consisting of electrodeposition processes, atomic layer deposition, melt-infiltration, sol-gel, in situ polymerisation or crystallisation, vapor phase deposition, etc. Some examples of nanostructured materials obtained by means of the aforementioned methods are metal nanowires, semiconductor nanowires, or polymers formed in the interior of the longitudinal pores of the anodized alumina film. As a result, a set of nanowires or nanotubes perpendicular to the substrate surface is obtained. In a subsequent process, the nanowires or nanotubes can be extracted from the matrix by selective dissolution of the alumina film in acidic and basic media. As a result, scattered and separated nanowires or nanotubes are obtained. Until now, it has not been able to interconnect the nanowires or nanotubes generated when using the anodized alumina film as a mould.

Furthermore, materials currently exist having an ordered (periodic) and three-dimensional porous structure in the range of sizes of the porous structure of the AAO, they are systems produced from continuous block copolymer (BC) phases of the gyroid type, double gyroid type, etc. However, the use of AAO materials as nano-moulds has some advantages over the use of BC materials for the manufacture of ordered nanostructures:
i) Many of the processes for obtaining inorganic nanostructured materials of interest involve aggressive reaction conditions in terms of high temperatures, high vacuum or the presence of highly reactive species (plasmas, ions, radicals,...), which will be difficult to support by the block copolymer, since it is composed of highly degradable organic molecules, typically polystyrene and ethylene polyoxide. Consequently, BCs are not compatible with many types of growing methods of inorganic materials. However, AAO materials are composed of aluminium oxide, which is much more stable (thermally, mechanically, etc.) than the organic compounds that integrate the porous system of the BC and, therefore, is compatible with many more growth methods, due to which a larger number of materials can be used to manufacture nanostructures.
ii) The porous BC lattice is composed of organic polymers such as polystyrene and ethylene polyoxide, which have low surface energy (to the order of tens of mN/m). This may hinder the infiltration of other organic liquids such as polymer solutions, small molecules or precursors, which would complicate the manufacture of three-dimensional lattices of organic compounds such as polymers and other molecular materials. However, AAO materials, on being composed of aluminium oxide, have a surface energy to the order of thousands of mN/m. This means that any organic liquid will wet the surface of AAO materials. Consequently, it will be possible to infiltrate any organic liquid into the pore lattice, due to which practically any organic compound can be nanostructured using AAO materials.

Furthermore, a limitation of the state of the art in the dying of anodized alumina layers consists of the fact that the pigment colours appear the same from all viewing angles, since the films do not exhibit structural-type colours as a result of selective reflection or iridescence phenomena that are characteristic of multilayer structures; having a limitation on the aesthetic and optical properties derived from these materials. The different known methods for dyeing the oxide layers formed during the anodizing process are those consisting of dyeing with inorganic or organic substances. Therefore, techniques based on optical interference processes can provide finishes such as blue, pearl gray and green; however, finishes by optical interference are based on subsequent changes to the pore of the aluminium oxide formed during the anodizing stage.

It would therefore be desirable to have a three-dimensional porous alumina structures that enable, on the one hand, growth of three-dimensional interconnected structures within its matrix that can serve as nanoarchitecture that promotes the interconnection of nanowires of various materials grown on the matrix and, on the other, that make it possible to obtain variation in the optical properties that makes it possible to obtain different finishes with different optical characteristics and, thus, greater aesthetic variety.

### DESCRIPTION OF THE INVENTION

A first aspect of the present invention relates to a nanostructured material comprising a porous anodic alumina film, which in turn comprises pores preferably cylindrical and parallel to each other which are perpendicular to the substrate of the anodized surface called longitudinal pores, and also transverse pores on a plane parallel to the surface of the anodized alumina pores that interconnect the longitudinal plane.

Another aspect of the invention relates to a process for obtaining the nanostructured material of the first aspect of the invention, anodized aluminium nanostructured material (AAO); said material is constituted by a homogeneous hexagonal lattice of longitudinal pores based on a substrate and which are arranged parallel to each other and perpendicular to the anodized surface, and of longitudinal pores interconnected by transverse pores arranged with their longitudinal axes parallel to the substrate, defining planes parallel thereto.

The first aspect of the present invention relates to the material itself which, in a preferred embodiment, has a porous anodic alumina film comprising longitudinal pores perpendicular to the substrate surface that contains aluminum; and transverse pores on one or more planes parallel to the substrate that interconnect the perpendicular pores having a cylindrical or elliptical cross-section. In a preferred embodiment of the first aspect of the present invention, the pores perpendicular to the surface anodic alumina film are parallel therebetween and perpendicular to the anodized surface or substrate and located along the entire thickness of the anodic alumina film in such a manner as to pass through the anodized alumina film, which is why they are called "longitudinal pores" and have ordered adjacent outer walls, more specifically forming a hexagonal-type lattice. The diameter of the longitudinal pores and the typical spacing between them are similar to those formed in porous anodic alumina films described in the state of the art; in this preferred embodiment of the first aspect of the present invention, the longitudinal pores have a diameter comprised between 6 nm and 500 nm.

In a preferred embodiment of the first aspect of the invention, the transverse pores have a circular cross-section with the axis aligned in the perpendicular direction and the axis aligned in the parallel direction, this being less than 100 nm; in other possible embodiments of the first aspect of the invention the pores may have an ellipsoidal cross-section characterised in that it has two axes, at least one of which has nanometric dimensions, preferably less than 100 nm; such that there is an axis in the perpendicular direction to the longitudinal axis of the longitudinal pores and, therefore, of the longitudinal pores, and a second axis aligned in the parallel direction to said axis and to the longitudinal pores. Transverse pores may have different values between the axes corresponding to the perpendicular direction to the longitudinal pores and to the parallel direction to the longitudinal pores.

However, the dimension of the axes, the orientation of the axes and the relationship between the two axes may be established in connection with the process for obtaining the described material, as detailed in the description of the second aspect of the invention related to a process for obtaining the nanostructured material described herein.

In the first aspect of the invention, the nanostructured material described herein has transverse pores perpendicularly connecting the longitudinal pores; said connection is carried out through the first neighbors, as detailed above; that is, a transverse pore connects the longitudinal pores found at the smallest possible distance therebetween at their position in the anodic alumina film. The transverse pores are arranged parallel to the surface of the anodized layer, i.e. parallel to the substrate, and also have hexagonal symmetry characterised in that the angle contained between two adjacent transverse pores is comprised on average between 50° and 70°. As is apparent from a hexagonal system, the number of transverse pores that connect longitudinal pores through their first neighbors is usually six. In the situation of an anodic alumina with hexagonally ordered longitudinal pores, the diameter of the axis aligned in the perpendicular direction to the longitudinal pores of the transverse pores will be less than 1.047 times the radius of the longitudinal pore.

However, due to the nature of the invention, it is possible that the material described herein may have defects in the hexagonal arrangement of the longitudinal pores. The loss of hexagonal symmetry allows the number of longitudinal pores considered as first neighbours to vary between 4, 5 or 7. The transverse pores connect the first longitudinal pores by means of first neighbors, due to which in this situation of disorder the number of transverse pores on a plane for a longitudinal pore may vary between 4, 5 or 7, depending on the number of first neighbors of said longitudinal pore.

In the preferred embodiment of the first aspect of the present invention, the anodic alumina film has at least one longitudinal pore, preferably several, defined on planes interconnected by at least one transverse pore. As is the case of longitudinal pores, there is preferably a plurality of transverse pores defined on one or more planes. The aforementioned connection between the longitudinal pores and the transverse pores performed preferably by means of first neighbors, thereby generating a three-dimensional porous lattice. The transverse pores laterally connect the longitudinal pores such as to form a three-dimensional lattice of cubic or prismatic cells having nanometric-sized pore cross-sections, i.e. smaller than 100 nm. Thus, the material of the present invention has an advantage over those found in the state of the art, since it has a three-dimensional lattice of nanometric porosity which maintains the mechanical integrity of the anodized alumina film.

In an even more preferred embodiment of the first aspect of the present invention the material, i.e. the anodic alumina film, the layer that comprises the transverse pores has a lower density than that of the layer containing only longitudinal pores.

The material of the first aspect of the invention described herein may have one or more transverse pore planes, although a three-dimensional internal nanostructure could be configured with a single channel; the transverse pore planes are arranged at a distance that can be adjusted during the process of obtaining the material, i.e. it can be defined by setting the parameters of the process described in another aspect of the present invention. Therefore, a set of transversal pore planes allows makes it possible to obtain a nanometric three-dimensional porous lattice in a film of the nanostructured material described herein, where:
- the distance between the transverse planes of pores is constant or periodic,
- the distance between the transverse pore planes is variable or aperiodic, and
- a combination of transverse pore planes with constant distance and transverse pore planes with variable distance.

In that aspect of the present invention relating to the process of obtaining the aforementioned nanostructured material, said material having anodized alumina films with the aforementioned longitudinal pores and transverse pores, obtaining said material requires:
a) preparing the metal surface to be anodized, the substrate; said preparation includes cleaning a metal aluminium substrate, electrochemical polishing, a first anodizing and chemical attack.
b) performing an anodizing process pulsing between a fixed-potential mild anodizing and current-limited hard anodizing pulses to grow the anodized alumina layer, and
c) conducting a chemical attack to reveal the porous structure.

In a preferred embodiment of the aspect of the invention relating to the process for obtaining the nanostructured material, anodizing is initiated once the surface has been prepared as indicated; however, in other alternative embodiments, or when a preparation process is required, it may include cleaning and degreasing by means of sonication in acetone, distilled water, isopropanol and ethanol. The approximate duration of each step is 4 minutes and, once the substrate surface has been cleaned and degreased, it is subjected to electropolishing in a perchloric acid and ethanol solution at a ratio of 1 volume of perchloric acid and 3 volumes of ethanol under a constant voltage, such as for example that provided by 20 V for 4 minutes, although there are other alternative electropolishing and mechanical polishing methods that exist in the current state of the art that provide adequate surface finishes and, therefore, are also applicable to the present invention.

The substrate is then subjected to a first mild anodizing process to obtain preliminary structuring of the surface thereof and, therefore, improve the eventual longitudinal hexagonal arrangement of the longitudinal pores that will give rise to the longitudinal pores themselves. The aluminium film subjected to a first mild anodizing process is removed by means of chemical attack in an aqueous solution of 7% by weight of phosphoric acid and 1.8% by weight of chromic oxide.

The anodizing process of stage b) is a pulse anodizing process that uses mild anodizing stages at fixed potential and current-limited hard anodizing pulses. In the mild anodizing stages the nominal potential use is selected between 20 V to 30 V, preferably 25 V. In the hard anodizing stage the current is limited to 60 mA, preferably 55 mA, as a result of which the maximum voltage peaks reached by the hard anodizing pulses are limited to 35 V, preferably 32 V. Likewise, hard anodizing pulses have a time limit and the maximum duration is 5 seconds, preferably 3.5 seconds and, more preferably, 2 seconds. By limiting the maximum current and duration of the hard anodizing pulses, a limitation occurs at the maximum voltage reached which, in turn, results in effective control of the growth of the anodized alumina layer. Growth of the anodized alumina layer is understood to be the increase in thickness thereof. This process has an advantage over the processes described in the state of the art because it makes it possible to maintain the hexagonal distribution of the longitudinal pores without altering its diameter. The limitation in growth of the anodized alumina layer during current-limited hard anodizing pulses makes it possible to obtain transverse channels that interconnect the longitudinal pores.

The current-limited pulsing process of stage b) produces a transverse pore plane for each current-limited hard anodizing pulse. The distance between the transverse pore planes is directly related to the duration of the mild anodizing stages at constant potential; said distance between the planes can be defined and controlled by setting the mild anodizing time to constant potential. Therefore, structures can be designed that maintain a constant distance between transverse pore planes, thereby generating a set of transverse pore planes with a periodicity. Similarly, a variable distance can be established between the different transverse pore planes. Furthermore, a variable distance can be established between the different transverse pore planes. Beyond this, different combinations of distances between transverse pore planes can be generated, such as for example sets of transverse pre planes with constant distance alternated with transverse pore planes at variable distances.

The method described herein allows the design of periodic and non-periodic lattices and a combination of periodic and non-periodic transverse pore planes that, as will be seen below, make it possible to obtain optical reflection properties not described in the state of the art for this type of materials.

The current-limited pulsing process makes use of an electrolyte selected from sulfuric acid, oxalic acid and phosphoric acid, preferably using 0.3 M sulfuric acid to obtain pores within the nanometer range, longitudinal pore diameters lower than 100 nm. During pulse anodizing, agitation can be maintained to favour the homogeneity of the anodized alumina layer; likewise, the current-limited pulsing process is performed by a programmable power source so as to adjust the distance between the transverse pore planes or between the sets of transverse pore planes. Likewise, the thickness of the anodized alumina film depends on the anodizing time used. The thicknesses of the nanostructured anodized alumina material layers have dimensions ranging between 100 nm and 500 pm. The current-limited pulsing process is performed at a temperature below 25°C, preferably at a temperature below 10°C and more preferably at a temperature below 5°C. A lower reaction temperature favours less growth of the anodized alumina film, resulting in better control of the transverse pore cross-sections grounds, thereby representing an advantage for obtaining transverse pores.

After steps a) and b) it is subjected to chemical attack to reveal the three-dimensional porous structure. The formation of transverse pores is performed subjecting the anodized alumina film to acid attack, preferably using 5% by weight of phosphoric acid in order to preferentially dissolve alumina regions formed during the current-limited pulse hard anodizing of stage b). Pore formation takes place following an attack of 16 to 21.5 minutes at a temperature of 30- 35°C. The acid attack preferentially dissolves the material grown during current-limited pulse hard anodizing, thereby forming transverse pores that interconnect the longitudinal pores.

In another preferred embodiment of the second aspect of the present invention, the aluminium foil with an anodized alumina layer obtained after step c) may have a three-dimensional porous lattice comprising longitudinal pores having a circular cross-section which are parallel therebetween and transverse pores that interconnect the aforementioned longitudinal pores.

The above steps generate an anodized alumina layer, the nanostructured material of the invention that detaches from the unreacted aluminium substrate either by physical means or by chemical means, for example using a CuCl₂ chloride solution, but not limited thereto, making it possible to obtain self-supported anodized alumina films comprising a three-dimensional lattice of longitudinal and transverse pores.

The result obtained may be subjected to a milling operation following a process that can be milling in a hammer mill, milling in a ball mixer, though not limited to these processes, so that discrete particles are obtained from the film. These particles retain the optical properties of the film, thereby being advantageous for use with pigments.

The nanomaterial obtained enables diffraction of light when done with the adequate periodicity, thereby generating different colours depending on the viewing angle. This effect is a direct consequence of the diffraction formed by the transverse pore planes and can therefore be modulated. Colour variation for a coating according to the viewing angle and has an aesthetic advantage on anodic alumina layers described in the prior art that goes beyond the interference colours to have a variable optical response of the layer alumina caused by the diffraction grating formed by the planes of transverse pores.

A third aspect of the present invention relates to the use of the nanostructured material of the invention as a mould or pattern for manufacturing lattices of nanowires and/or three-dimensional nanotubes. The interconnected three-dimensional pore structure is used as a mould or pattern to be filled with a material selected from metal, organic and inorganic materials. The processes followed to fill the three-dimensional porous structure described herein are selected from processes described in the state of the art to generate nanometric structures in the two-dimensional porous, such as electrochemical deposition, sol-gel, in situ polymerisation, atomic layer deposition any other that may be used with the porous alumina described in the state of the art and, therefore, not limited thereto. The advantage of the present invention over the state of the art relates to the existence of a three-dimensional lattice that comprises the filling of the longitudinal pores and the filling of the transverse pores that interconnect the longitudinal pores by the material selected in accordance with the process followed.

In another preferred embodiment of the third aspect of the present invention, the anodic alumina that comprises an interconnected three-dimensional lattice is filled with a material of varying density that makes it possible to change the colour of the anodized alumina film containing a three-dimensional porous lattice.

A fourth aspect of the present invention relates to the use of three-dimensional lattice of nanotubes or nanowires with a nanometric cross-section in accordance with their composition for use as thermoelectric elements, supercacitators, electronic, catalyst supports, filtration and separation membranes, drug release systems, scaffolding for cell growth, sensors, batteries, energy, optical devices and optoelectronic devices. Although it is not limited to other applications wherein the porous alumina described in the state of the art have been used, but also has the advantage of nanostructuring of the material in the form of three-dimensional lattices.

### DESCRIPTION OF THE DRAWINGS

In order to complement the description being made and with the object of helping to better understand the characteristics of the invention, in accordance with a preferred embodiment thereof, said description is accompanied, as an integral part thereof, by a set of drawings where, in an illustrative and non-limiting manner, the following has been represented:
Figure 1. Shows a diagram showing a film of material of the invention on aluminium, said film comprising longitudinal pores perpendicular to the anodized alumina layer and transverse pore planes parallel to the surface of the anodized alumina that interconnect the longitudinal pores in the perpendicular direction thereto.
Figure 2. Shows a diagram of the internal three-dimensional lattice of the invention showing the arrangement of longitudinal pores and transverse pore planes that interconnect them. The transverse pores interconnect the longitudinal pores through the first neighbours.

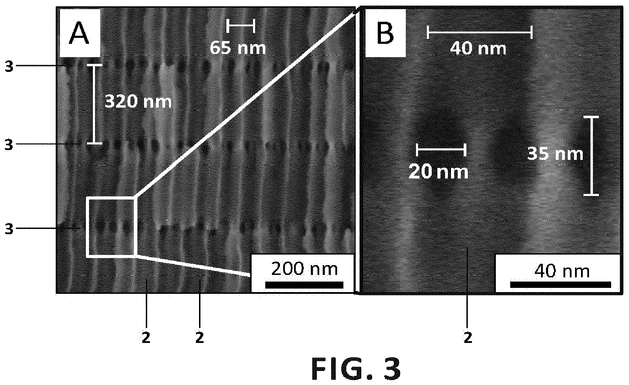

Figures 3a, 3b. Figure 3a shows a scanning electron microscopy micrograph of a cross section corresponding to a film of anodized alumina in which the existence of longitudinal pores and transverse pore planes that interconnect the longitudinal pores can be. The distance between longitudinal pores is 65 nm and the distance between transverse pore planes is 320 nm. Figure 3b shows a scanning electron microscopy micrograph corresponding to a higher magnification of the cross-section of (A), where the longitudinal pore diameter is 40 nm and the cross-section of the transverse pores is elliptical with at least one of its minor axes of 20 nm is aligned in the perpendicular direction to the longitudinal pores and a major axis of 35 nm aligned in the parallel direction to the longitudinal pores.
Figures 4a-4c. Shows scanning electron microscopy micrographs corresponding to a cross section of various films of the invention showing different distances between the transverse pore planes with a periodicity between the set of transverse pore planes. In Figure 4a, the distance between the transverse pore planes is 500 nm, in Figure 4b, the distance is 320 nm and in Figure 4c, 150 nm. The scale bars incorporated to the figures correspond to length of 500 nm.

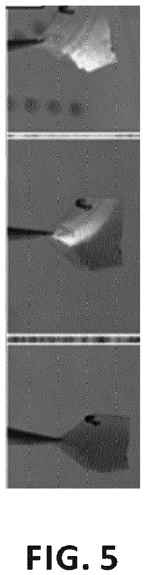

Figure 5 shows photographs of the film of the invention following the procedure described in the present invention, taken at different angles of incidence of light and showing interference colours.
Figure 6 shows a scanning electron microscopy micrograph of a cross-section of a film of the invention wherein the transverse pores have aperiodic distance.
Figures 7a and 7b. Show photographs of three-dimensional periodic lattices of conjugated polymer nanowires embedded in films of the invention taken upon exposure to black light. The conjugated polymers infiltrated in the anodized alumina films referred to were in Figure 7a: PCDTBT, PFO-DTBT, P3EAT and PPV. Figure 7b: the infiltrated polymer is PVDF-TrFE. The scale bars represent a length of 1 cm.
Figure 8 shows a scanning electron microscopy micrograph corresponding to a cross-section of a three-dimensional periodic lattice of polystyrene nanowires. The scale bar of the internal image represents a length of 1 cm.
Figure 9 shows a scanning electron microscopy micrograph corresponding to a cross-section of a three-dimensional periodic lattice of Bi₂Te₃ nanowires.

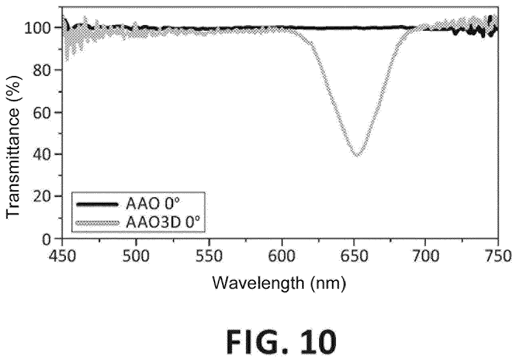

Figure 10 shows a graph showing the optical properties of the material of the invention. Said graph shows a correlation between transmittance and wavelength for an alumina represented with a dark line and the material of the invention, three-dimensional alumina, represented with a lighter line.

### PREFERRED EMBODIMENT OF THE INVENTION

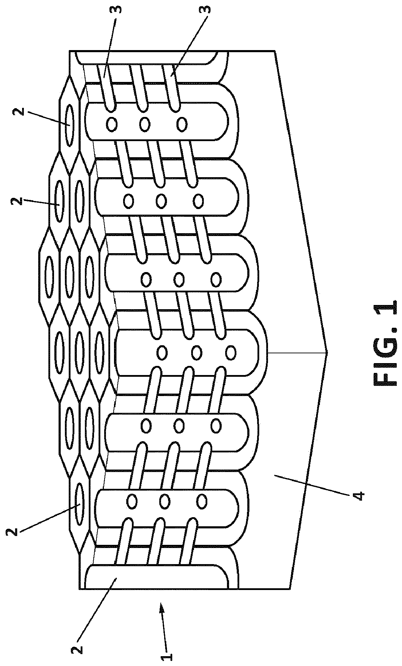

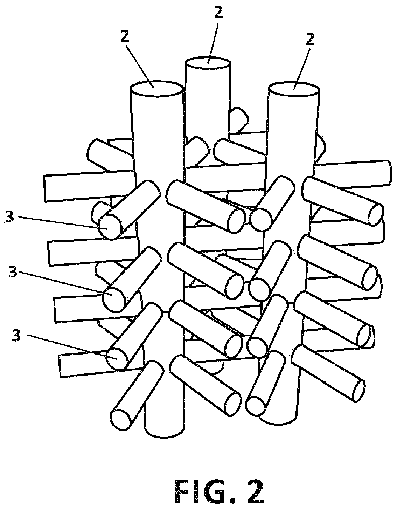

As a practical embodiment of the invention, but not limited thereto, following is a description of various examples of embodiment of the three-dimensional nanostructured material (1) of one of the aspects of the invention that is shown in figures 1 and 2 using anodizing electrolytic processes, that implement the main concepts object of this invention in a simple manner.

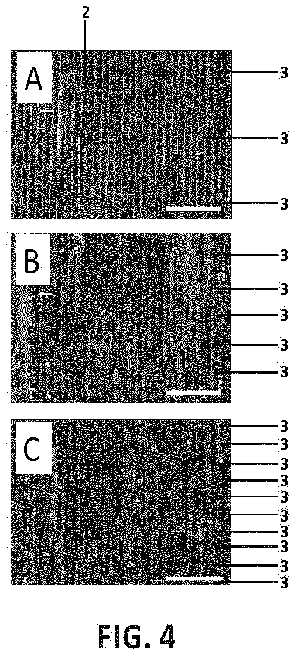

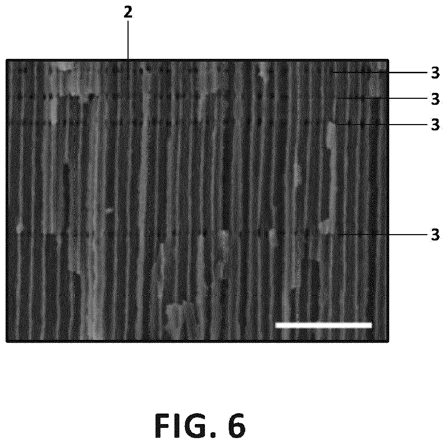

**Example 1**: Relates to a porous alumina film - nanostructured material (1) of the invention - on a substrate (4), said film having at least one longitudinal pore (2), preferably several longitudinal pores (2) that emerge from said substrate (4) and having respective longitudinal axes essentially perpendicular to the substrate (4) and which are connected by at least one transverse pore (3), preferably various longitudinal axes (3) defined in periodically spaced planes, as can be observed in Figures 4a-4c, although in other possible embodiments, as can be observed in Figure 6, the transverse pores (3) may be defined in planes having aperiodic distances therebetween, as will be seen in subsequent example.

An aluminium wafer 1.6 cm diameter was firstly subjected to a cleaning process using acetone, water, isopropanol and ethanol sequentially. Next, the clean aluminium wafer was subjected to an electrochemical polishing process in an electrolyte composed of HClO₄:EtOH (1:3) at 20 V for 3 minutes. After the electrochemical polishing process, the wafer was subjected to a first anodizing reaction at a voltage of V_{AB}, V 25, to form aluminium oxide film called alumina. This alumina layer was removed by dissolution in a mixture of phosphoric acid at 7% by weight and chromic oxide at 1.8% by weight for 24 hours at 25°C.

After removing the first layer of alumina formed, the silicon wafer was subjected to a second anodizing process using pulse anodizing, which consisted of applying a constant voltage of 25 V for 180 s and a pulse at a nominal voltage of 32 V for 2 s. The second pulse anodizing process produced a growth of anodic alumina. This second anodizing process was maintained until the thickness of said layer was 20 µm.

In a process subsequent to the growth of the anodic alumina layer by pulse anodizing, the alumina layer formed is subjected to a chemical attack process using H₃PO₄ at 5% by weight at a temperature of 30 ° C for 18 minutes.

The resulting anodic alumina film whose microstructure is shown in Figure 3a is characterized by having longitudinal pores (2) and transverse planes pores (3) resulting in the nanostructured material (1). The longitudinal pores (2) are characterised in that they have a hexagonal arrangement, a distance of 65 nm between first neighbours and a cross-section of 40 nm. Transverse pores (3) are characterised in that they have an elliptical section with an axis aligned parallel to the 35 nm longitudinal pores (2) and an axis aligned on the 25 nm transverse pore plane (3) (see Figure 3b). Transverse pore planes (3) may have a periodic distance of approximately 320 nm (see Figure 3a).

In another preferred embodiment of example 1, the application time of the pulse anodizing process was maintained until reaching an anodized alumina film thickness of 200 µm. The anodized alumina film thus obtained has the same characteristics described above relating to the dimensions and the arrangement of the longitudinal pores (2) and transverse pores (3).

In another preferred embodiment of Example 1 in the second anodizing process using pulse anodizing during the application of a constant voltage of 25 V between pulses at a nominal voltage of 32 V for 2 s, it was varied so that longer times between pulses increased the distance between the transverse pore planes (3) and shorter times decreased said distance. The distance between transverse pore planes (3) can be proportional to the time of application of the constant voltage between current-limited anodizing pulses.

The nanostructured material (1) of the invention, and therefore the anodic alumina film, may exhibit a colour that is variable depending on the angle of incidence of light forming an interference colour.

**Example 2:** porous alumina film with longitudinal pores (2) connected to aperiodically spaced transverse pore planes (3).

The porous alumina material of Example 1 was processed following the process described in said Example No. 1, which was repeated during the pulse anodizing process modifying the application time at a constant voltage of 25 V between the current-limited anodizing pulses at a nominal voltage of 32 V. The resulting alumina film is characterised as shown in Figure 6 in that it has transverse pore planes (3) are aperiodically spaced.

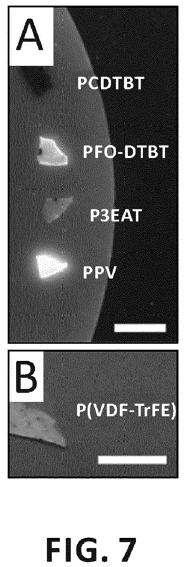

**Example 3.** Porous alumina film with longitudinal pores (2) connected to transverse pore planes (3) filled with polymeric material which is shown in Figures 7a and 7b.

The porous alumina material of Example 1 was processed following the process described in said Example No. 1 and the three-dimensional pore lattice was filled following a process of infiltration of polymeric compounds, PFO-DTBT, P3EAT and PPV. In order to fill the porous alumina with longitudinal pores (2) and transverse pores (3) with these polymers, the following solutions were prepared: PCDTBT 4g/L in chloroform, PFO-DTBT 4g/L in chloroform, P3EAT 4g/L in chloroform and PPV 4g/L in tetrahydrofuran. Next, the anodized alumina films with three-dimensional porosity were immersed in each of the solutions for 10 minutes. The anodized alumina films with three-dimensional porosity were extracted and the solvent contained in their pores was left to dry in ambient conditions.

The nanostructured material (1) and therefore, the porous alumina film with longitudinal pores (2) connected to transverse pore planes (3) filled with these polymeric materials may have luminescent properties that vary depending on the polymer used.

In another preferred embodiment of Example 3, the nanostructured porous alumina material (1) of Example 1 was processed following the process described in said Example 1 and the three-dimensional pore lattice was filled following a process of infiltration with polymeric compound of P(VDF-TrFE). In order to fill the nanostructured anodized alumina material (1) with three-dimensional porosity with this polymer, the following solution was prepared: P(VDF-TrFE) 5% by weight of dimethylformamide. Next, the AAO3D was immersed in the solution for 10 minutes. The anodized alumina film with three-dimensional porosity was extracted and the solvent contained in its pores was left to dry in ambient conditions. The porous alumina film with longitudinal pores (2) connected to transverse pore planes (3) filled with said polymeric materials has the advantage of having possess ferroelectric properties besides luminescent properties that also change with the angle of incidence of light.

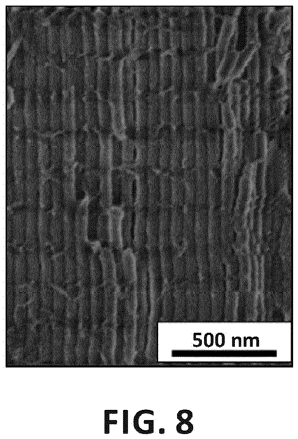

**Example 4.** Process for obtaining three-dimensional polymer nanowire lattices interconnected as shown in Figure 8.

The nanostructured porous alumina material (1) Example 1 was processed following the process described in said Example 1 and the three-dimensional pore lattice (2, 3) was filled with polystyrene following a process of in situ polymerisation. The styrene was polymerised within the three-dimensional alumina using AIBN as a primer in an atmosphere of N₂ for 1 hour. Subsequently, the nanostructured anodized alumina material (1) was selectively dissolved in a solution of 10 M NaOH for 60 minutes. As a result, a polypropylene nanowire lattice connected by transverse planes of polystyrene wires that connect the longitudinal wires through their first neighbours was obtained.

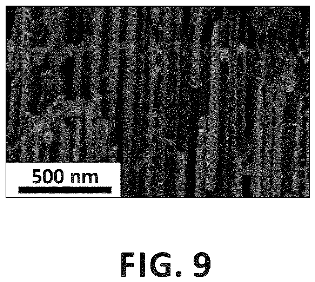

**Example 5.** Process for obtaining three-dimensional lattices of interconnected Bi₂Te₃ nanowires shown in Figure 9.

The three-dimensional nanostructured porous alumina material (1) of Example 1 was processed following the process described in said Example 1 and the three-dimensional pore lattice (2, 3) was filled with Bi2Te3, following an electrochemical deposition process. To this send, a metallic layer was deposited on one of the 3D alumina surfaces that served as an electrode. This deposited electrode was used as a cathode of an electrochemical cell. The growth of Bi₂Te₃ inside the three-dimensional porous lattice in the anodic alumina was carried out by means of electrodeposition in a triple-electrode electrochemical cell for 8 hours. The conditions of the pulses were: 20 mV for 0.1 s and 0 mA/cm² for 0.1 s. The three-dimensional porous anodic alumina film thus obtained and filled by electrochemical deposition of Bi₂Te₃ is characterised in that it is green as opposed to the colour of the compound Bi₂Te₃, which is dark grey.

As a result, a lattice of Bi₂Te₃ nanowires was obtained. An X-ray diffraction assay confirmed the crystalline structure of Bi₂Te₃. This crystalline phase is characterised in that it has a semiconductor response that confers thermoelectric properties, therefore it can be used in power generation devices.

## Claims

1. Nanostructured material (1) comprising a substrate (4), which in turn comprises aluminium, wherein at least one longitudinal pore (2) is disposed on the substrate (4), whose longitudinal axis is essentially perpendicular to said substrate (4), wherefrom nanostructured material (1) emerges, **characterised in that** it comprises at least one transverse pore (3) whose longitudinal axis is essentially perpendicular to the longitudinal axis of the longitudinal pore (2).

2. The nanostructured material (1), according to claim 1, **characterised in that** the longitudinal pore (2) has an essentially circular cross-section.

3. The nanostructured material (1), according to claim 2, **characterised in that** the circular cross-section of the longitudinal pore (2) has a diameter comprised between 6 nm and 450 nm.

4. The nanostructured material (1), according to claim 1, **characterised in that** the longitudinal pore (2) has an elliptical cross-section.

5. The nanostructured material (1), according to any one of claims 1 to 4, **characterised in that** the transverse pore (3) has an elliptical cross-section.

6. The nanostructured material (1), according to any one of claims 1 to 4, **characterised in that** the transverse pore (3) has a circular cross-section.

7. The nanostructured material (1), according to claim 6, **characterised in that** the circular cross-section has a diameter of 100 nm.

8. The nanostructured material (1), according to claim 5, **characterised in that** the ellipse of the cross-section comprises:
- a first axis having a perpendicular direction to the longitudinal axis of the longitudinal pore (2), and
- a second axis aligned in a parallel direction to the aforementioned longitudinal axis of the longitudinal pore (2).

9. The nanostructured material (1), according to claim 8, **characterised in that** at least one of the axes of the elliptical cross-section is less than 100 nm in size.

10. The nanostructured material (1), according to any one of the preceding claims, **characterised in that** it comprises a plurality of transverse pores (3) defined with their longitudinal axes parallel therebetween and defining at least one plane parallel to the substrate (4).

11. The nanostructured material (1), according to claim 10, **characterised in that** it comprises at least two transverse pore planes, wherein said planes are parallel therebetween.

12. The nanostructured material (1), according to claim 11, **characterised in that** the transverse pore planes are equidistant.

13. The nanostructured material (1), according to any one of the preceding claims, **characterised in that** it comprises a plurality of longitudinal and transverse pores, defining a three-dimensional pore lattice wherein the longitudinal pores are perpendicular to the substrate (4) and the transverse pores (3) are perpendicular to the longitudinal pores, passing through the latter and orthogonally crossing the respective longitudinal axes of the pores.

14. A process for obtaining an anodized nanostructured material (1), process **characterised in that** it comprises:
a) preparing a substrate (4) that comprises Al,
b) carrying out an anodizing process on a surface of the substrate (4) and growing at least one nanostructured anodized material layer on the substrate(4), said layer corresponding to the anodized nanostructured material (1), wherein said anodizing process comprises pulse anodizing, which in turn comprises:
• pulse mild anodizing stages with fixed potential, and
• current-limited pulse hard anodizing stages,
c) carrying out a chemical attack to reveal the transverse pores.

15. A method, according to claim 14, **characterised in that** the preparation step comprises: at least one cleaning of the substrate (4), electrochemical polishing, previous anodizing and chemical attack.

16. The method, according to claim 14, **characterised in that** the fixed potential of the mild anodizing pulses is comprised between 20-30 V and the current of the hard anodizing pulses has a maximum limit value of 60 mA.

17. The method, according to claim 14 or 16, **characterised in that** the pulse hard anodizing stage has a maximum duration of 5 seconds.

18. The method, according to any one of claims 14 to 17, **characterised in that** the hard anodizing pulses have a fixed potential with a maximum value of 35 V.

19. The method, according to any of claims 14 to 18, **characterised in that** at least the anodizing process is performed at a temperature below 25°C.

20. The method, according to any one of claims 14 to 19, **characterised in that** the anodizing process is performed using an electrolyte selected from the group consisting of: sulfuric acid, oxalic acid and phosphoric acid.

21. The method, according to any one of the preceding claims, **characterised in that** it additionally comprises agitating the substrate (4) during the anodizing process, homogenising the nanostructured anodized material layer during its growth on the substrate (4).

22. The method, according to any one of claims 14 to 21, **characterised in that** it additionally comprises performing a chemical attack on the alumina layer with 5% by weight of phosphoric acid for the purpose of generating pores by means of dissolution of alumina regions formed during current-limited pulse hard anodizing.

23. The method, according to claim 22, **characterised in that** the chemical attack is performed for a time comprised between 16 minutes and 21.5 minutes at a temperature comprised between 30°C and 35°C.

24. A nanostructured material (1), obtainable by means of the process described in any of claims 14 a 24.

25. Use of the nanostructured material (1), according to any one of claims 1 to 13 or 25, as a mould for obtaining nanostructures.

26. Use of the nanostructured material (1), according to claim 26, **characterised in that** the nanostructures comprise at least one of: nanowires and nanotubes.
